(19) **Europäisches Patentamt European Patent Office Office européen des brevets**

(11) **EP 4 141 744 A1**

(12) **EUROPEAN PATENT APPLICATION**

(43) Date of publication:
01.03.2023 Bulletin 2023/09

(21) Application number: 21194177.8

(22) Date of filing: 31.08.2021

(51) International Patent Classification (IPC):
*G06N 3/04* (2006.01)　　*G06N 3/08* (2006.01)

(52) Cooperative Patent Classification (CPC):
G06N 3/084; G06N 3/044; G06N 3/045;
G06N 3/047; G06N 3/088

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Sensyne Health Group Limited
Oxford OX4 4GE (GB)

(72) Inventors:
• JAVER, Avelino
Oxford, OX4 4GE (GB)

• CARR, Oliver
Oxford, OX4 4GE (GB)
• ROCKENSCHAUB, Patrick
Oxford, OX4 4GE (GB)
• DÜRICHEN, Robert
Oxford, OX4 4GE (GB)

(74) Representative: **Korenberg, Alexander Tal et al**
**Kilburn & Strode LLP**
**Lacon London**
**84 Theobalds Road**
**London WC1X 8NL (GB)**

(54) **SEMI-SUPERVISED MACHINE LEARNING METHOD AND SYSTEM SUITABLE FOR IDENTIFICATION OF PATIENT SUBGROUPS IN ELECTRONIC HEALTHCARE RECORDS**

(57) A computer-implemented method of training an artificial neural network is provided. The artificial neural network comprises an input layer, an embedding layer, a hazard layer and a cluster layer. The network may comprise one or more non-linear intermediate layers between the input and embedding layer, one or more further non-linear intermediate layers between the embedding and hazard layer as well as the cluster layer and respective network weights for each layer, wherein the dimensionality of the embedding layer is less than that of the input layer. Data units are defined within a data space to have a data value for each dimension of the data space and an outcome associated with each data unit, the outcome label indicating the outcome to which each data sample belongs and the time at which the outcome was observed. The network is trained using a combination of unsupervised learning to reduce a loss of the autoencoder and supervised learning to reduce a Cox regression loss of the hazard layer. The resulting network finds application in providing embeddings using a combination of unsupervised and supervised learning, for clustering data using the embedding, for example clustering patient subgroups based on electronic healthcare records (EHR) trajectory data. Advantageously, by combining the unsupervised training of the autoencoder with the supervised training of the hazard layer, it has been found that the weights of the autoencoder may be adapted to provide an embedding that better separates the outcomes in the data

FIG. 2

EP 4 141 744 A1

**Description**

TECHNICAL FIELD

The present disclosure relates to a machine learning system and method for embedding data using a combination of unsupervised and supervised learning, and in particular for clustering data using the embedding, for example clustering patient subgroups based on electronic healthcare records (EHR) trajectory data.

BACKGROUND

Identifying different patient subgroups is a fundamental step in understanding disease phenotypes and is necessary for improving treatment and care of patients. One way this can be achieved is by clustering patients into subgroups using EHR trajectory data including laboratory measures, diagnosis codes (ICD-10 codes), procedure codes (OPCS4 codes) and drug codes (BNF codes) as well as an indication of one or multiple clinical outcomes at different time points. EHR data is heterogenous, high-dimensional and sparse and therefore does not lend itself well to traditional clustering approaches such as k-means, mean shift or gaussian mixture models. It would be advantageous to provide systems and methods which address one or more of these problems, in isolation or in combination.

One way to improve the accuracy and efficiency of clustering high-dimensional data such as EHR is by finding a low-dimensional embedding and performing the clustering task on the embedded data. Finding a lower dimensional embedding is commonly achieved by linear approaches such as principal component analysis. Alternatively, machine learning models such as autoencoders have been shown to learn a more complex representation of data. Deep embedded clustering (DEC) is a technique that combines autoencoders with a clustering loss (or error) to find a low-dimensional embedding that is both representative of the data and provides optimal clusters. See Xie, Junyuan, Ross Girshick, and Ali Farhadi. "Unsupervised deep embedding for clustering analysis." International conference on machine learning. 2016, incorporated by reference in this disclosure. Unsupervised clustering is an important tool in stratifying patient and other populations to uncover different sub-populations, which may be used for triage, for example on hospital admissions or when predicting responsiveness to treatments or drugs. Thus, improved methods of learning an embedding and clustering are needed, in the context of analysing EHR but also more widely in any other application domain where it is of interest to cluster high-dimensional data.

SUMMARY

The inventors have realised that training clustering and embeddings together can be improved by taking account of other available information, so that the unsupervised clustering is helped by additional information used for supervised learning and in particular using timed outcomes and corresponding risk scores.

In a first aspect, a computer-implemented method of training an artificial neural network is provided. The artificial neural network comprises an input layer, an embedding layer, a hazard layer and a cluster layer. The network may comprise one or more non-linear intermediate layers between the input and embedding layer, one or more further non-linear intermediate layers between the embedding and hazard layer as well as the cluster layer and respective network weights for each layer, wherein the dimensionality of the embedding layer is less than that of the input layer. Data units are defined within a data space to have a data value for each dimension of the data space and an outcome associated with each data unit, the outcome label indicating the outcome to which each data sample belongs and the time at which the outcome was observed. For example, the outcome may indicate survival.

The method comprises using the embedding of each data unit to provide, directly or via one or more intermediate layers, an input to the hazard layer to produce a risk score for each data unit as an output of the hazard layer, comparing the risk score and outcome to determine a Cox regression loss for each data unit. The method further comprises comparing the data values and corresponding values generated using the embedding to determine a reconstruction loss for each data unit. The respective embeddings of the data units are used as an input to a clustering algorithm to assign each data unit to one of a plurality of clusters by optimizing a clustering loss. The losses are used to train the artificial neural network to reduce the reconstruction loss, the Cox regression loss and the clustering loss across the data units.

Advantageously, by combining the unsupervised training of the autoencoder with the supervised training of the hazard layer, it has been found that the weights of the autoencoder are adapted to provide an embedding that better separates the outcomes in the data and is therefore more useful for use in Cox regression tasks. It has further been found that this can improve the usefulness of the embedding for clustering tasks that can uncover previously unidentified (unlabelled) groupings in the data.

An embedding is a low-dimensional representation of high-dimensional data. The embedding may be any embedding learnt by a neural network. Embeddings can be performed by a variety of networks of different complexities.

For example, a relatively low complexity embedding may be performed by any linear neural networks trained to implement an embedding, such as a network trained to implement principal component analysis (PCA) or any technique related to PCA, such as minor component analysis (MCA), linear discriminant analysis (LDA), independent component analysis (ICA) or the like.

The embedding may be performed using a belief network, such as a Bayesian belief network (BBN). A BBN is a probabilistic graphical model that represents conditional dependences between random variables and can be seen as type of neural network with differentiable neurons. BBN capture knowledge of a dataset by building an acyclic graph in which nodes or neurons represent feature variables and connections between nodes represent direct probabilistic influences between the variables. Gradient descent can be used long each connection in order to find an estimate of the global distribution that approximates the variables within the conditional specification, once trained, the model provides a low-dimensional representation of the data that can be sampled from to reconstruct the input. The reconstruction loss for a BNN may use the Gibbs free energy of the configuration between layers to compute the gradient of the log probability of the joint probability distribution of the layers, where the joint probability distribution is a function of the energy of the joint configuration between layers.

Further aspects comprise a computer-implemented method of obtaining one or more risk scores for a data unit, each risk score corresponding to an outcome. The method comprises providing a neural network trained as described above, applying the data unit, comprising a vector composed of categorical and continuous variables to the input layer, obtaining the embedding for the data unit and using the embedding to produce the one or more risk scores for the data unit. In this aspect, the embedding used during training of the artificial neural network is optimized by training with a Cox regression loss. For example, by simultaneously optimising the loss of the autoencoder and the Cox regression loss, the embedding is optimised to determine a risk score.

Yet further aspects comprise a computer implemented method of identifying subgroups comprising training a neural network in accordance with the methods described above. The method comprises clustering the embeddings of the data units into a plurality of clusters and identifying a subgroup, for example a specific presentation of a pathology, of at least one of the groups, for example patients with a specific pathology or outcome, as corresponding to one of the clusters. The method may comprise clustering the embeddings of the data units into a plurality of clusters and determining a survival curve for each cluster. The clustering may be done using the clustering algorithm used for training, where applicable, or using a different clustering algorithm, for example agglomerative hierarchical clustering, with the embeddings as input.

Advantageously, identifying clusters in this way enables a better estimation of responsiveness to treatment, survival rates or other quantities of interest, based on belonging to a particular subgroup. For example, survival rates or treatment effectiveness can be measured in a group and analysed by cluster. Identified clusters may be used as part of a drug development pipeline to separately assess responses to a drug trial in respective subgroups, which may help to more specifically target development or identify more specific uses of a new drug then when looking at a, for example pathology, population group as a whole. In another example, related conditions identified in clusters can be used as exclusion criteria for treatment or trials for patients that might have poorer outcomes under treatment. In other examples, identifying clusters can be used to triage patients as to criticality or urgency of a condition or to propose a treatment plan.

Aspects extend to one or more computer-readable media encoding computer instruction that, when executed on a computing device, implement methods as described above and to a system comprising the one or more computer readable media, a memory for storing the artificial neural network and the data units and a processor for executing the instructions.

The present disclosure refers to artificial neural networks. It will be appreciated that artificial neural networks represent a specific parametrization of a non-linear function (in terms of network weights) and that the present disclosure is not limited by the language used to describe the non-linear function or its structure. It will be understood that an artificial neural network in the context of a computer implemented invention refers to a physical entity that exists either in terms of a physical state of a general purpose or specifically adapted computing platform or in a specifically adapted physical circuitry, for example.

BRIEF DESCRIPTION OF THE DRAWINGS

Illustrative implementations of the present disclosure will now be described, by way of example only, with reference to the drawings. In the drawings:

Figure 1 schematically shows a process of clustering data in an embedded space in accordance with aspects of the present specification;
Figure 2 schematically shows a logical block diagram of a system implementing the process to learn an embedding according to some embodiments;
Figure 3 schematically shows the process of processing data to learn an embedding;

**Figure 4** schematically shows a two stage training process;
**Figure 5** schematically shows a sequential training process;
**Figure 6** schematically shows a clustering process
**Figure 7** shows the adjusted rand scores for the three sets of clusters using an unsupervised, supervised, and the proposed semi-supervised method a the synthetic dataset
**Figure 8** shows unknown patient subgroups discovered using the disclosed semi-supervised clustering;
**Figure 9** shows survival curves for the patient subgroups in Figure 8;
**Figure 10A** shows the first two principle components of the embedding space found using standard autoencoder,
Figure **10B** shows the embedding space found using a variational autoencoder;
**Figure 11** illustrates a block diagram of one implementation of a computing device.

DETAILED DESCRIPTION

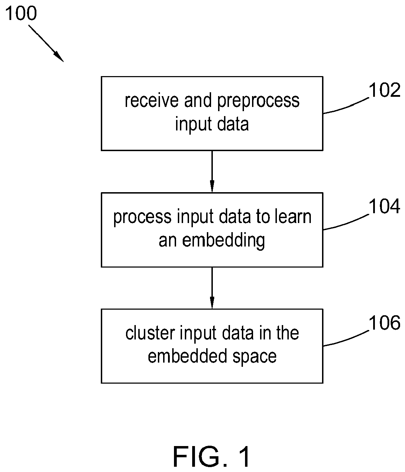

Figure 1 schematically depicts a process 100 of clustering data in an embedded space to discover unknown subgroups in the data. Process 100 can be implemented by any kind of general computer and is specifically suited for computers with a processing capacity adapted for machine learning processes.

The process comprises a step 102 of receiving an input data structure X that stores the data to be clustered. Each instance $x_{ij}$ of the input data structure X represents a patient i at a timestep j, so that X contains a time series for each patient. By way of non-limiting example, the input data structure may comprise electronic health records (EHR) of one or more patient cohorts. The input data may further comprise a corresponding time of observation, t and outcome, e associated with each patient *i*. The time of observation may be any suitable way of representing time such as a time since diagnosis of a particular disorder or a time since admission. Alternatively, the time may be the time since the first data point in the dataset.

The data may relate to any type of data that can be classified into subgroups. For example, the data may relate to phenotypic data obtained from an electronic health record and/or may be physiological data, laboratory measures, diagnosis codes (ICD-10 codes), procedure codes (OPCS4 codes) and drug codes (BNF codes). EHR data may further comprise physiological measurements, such as vital signs or laboratory measurements that include but are not limited to blood pressure, heart rate, oxygen saturation, temperature, alanine aminotransferase, creatinine, c-reactive protein, platelets, potassium, sodium, urea and white blood cells.

Once received, the input data structure X may be pre-processed before being passed on to the next step of process 100. Pre-processing may include but is not limited to filling in missing input values or partial deletion of data. In the example of EHR data, the input values are often sparse as the vital signs and laboratory measurements required for an effective diagnosis vary greatly across different diseases. In this example, pre-processing may be performed to fill in missing values to ensure all patients have the same number of input values $x_i$ in the EHR data for clustering. Pre-processing may further be performed to define smaller segments of data. For example, raw EHR data spanning 5 years may be cut into equally spaced time windows of 90 days in a process referred to as "time windowing". Within each time window, the data is aggregated. Binary data may be encoded using one-hot encoding which represents an ICD code as "1" if it occurs a given time window and "0" otherwise. Continuous data may be represented by computed features such as median, median absolute deviation (MAD), minimum, maximum, last, and count (if, for example, multiple measurements of white blood cells are present). Continuous data may further be normalised. The normalisation step may be performed in any standard way such as by scaling the data to mean = 0 and variance = 1; scaling the data to fit within a range where the minimum and maximum values of the data fall between 0 and 1, or using rank normalisation by defining each measurement as its rank within each feature. Alternatively, pre-processing may provide an intermediate representation that accounts for time between events (for example blood tests, diagnoses, medication and procedures) within or between admissions. In this example, the pre-processing may output multiple feature vectors of equal size for each patient for each time window.

In step 104, the input data structure X is processed to learn a low-dimensional cluster-optimised embedding that facilitates the discovery of unknown subgroups within the data using a semi-supervised machine learning model, as described in detail below.

In step 106, the input data is clustered in the embedded space into a plurality of clusters representing unknown subgroups. Performing clustering directly on high-dimensional data is challenging due to the problem known as "the curse of dimensionality", which refers to a series of phenomena that arise in high-dimensional spaces but do not occur in lower dimensions. By performing clustering on the low-dimensional embedded space, step 106 avoids the "curse of dimensionality" problem and improves the efficiency and accuracy of the clustering process. Step 106 may be implemented using any clustering approach, depending on the problem of interest. A clustering approach refers to any approach that groups a multi-dimensional data set into closely related groups and may refer to techniques such as k-nearest neighbours, k-means, Gaussian mixture models, mean shift and the like.

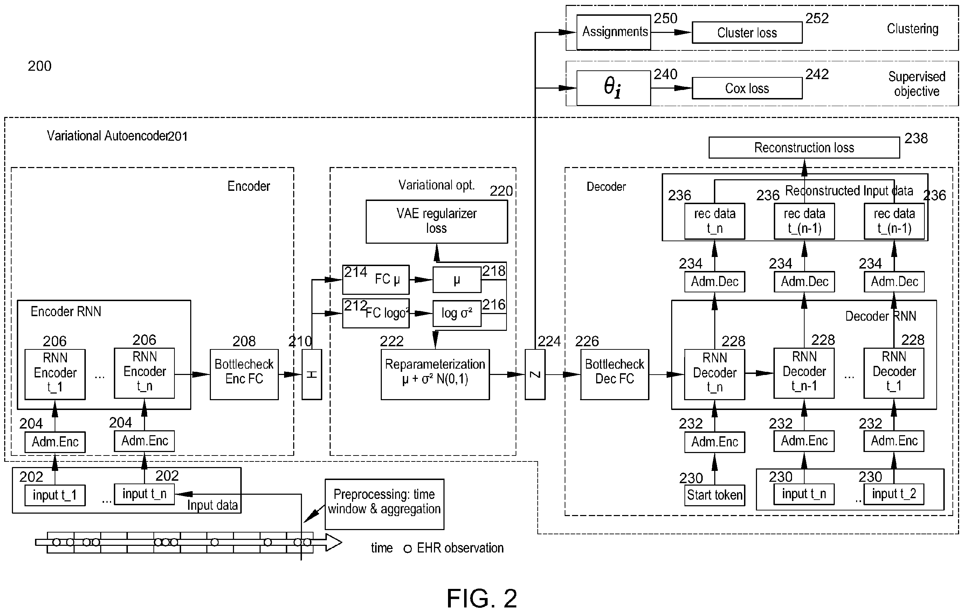

Figure 2 shows a logical block diagram of a system for implementing a process to learn an embedding using a variational autoencoder according to some embodiments.

The encoder of a variational autoencoder neural network 200 generates a low dimensional embedding of the (where applicable pre-processed) input data 202 and comprises a fully connected admission (Adm) encoder 204, an RNN encoder 206 and optionally, a fully connected bottleneck encoder 208.

The Adm encoder 204 takes the feature vector and converts it into a predetermined size. The Adm encoder 204 in the described embodiment is a single fully connected layer with Leaky ReLu activation functions. Other suitable implementations to convert the feature vector into a predetermined size are of course also possible, including other number of layers, architectures and activations. In the described embodiment, the common feature vector per time window of size 1151 is converted to size 256 (1151 x 256), however it is understood the vector could be any arbitrary size depending on the dataset. Leaky ReLU activation is an activation that returns an output of f(x) by directly returning x if the x is equal or above 0 and returns c*x if x is below zero, with c being a small predefined constant such as 0.01.

The RNN encoder 206 receives as input from the Adm encoder, the time window feature vector of size 256 and outputs an embedding. A time window feature vector describes the outcomes occurring within a respective time window. The time windows could be defined to start at the previous and end at the current timestep or in any other suitable way. In the described embodiment, the RNN encoder 206 is a 2 layer bidirectional, GRU RNN encoder. A bidirectional RNN is an RNN that takes the encoded time window vector as an input once forward (t = 1...n) and once backward (t = n...1). In the described embodiment, the RNN encoder 206 has embedding size 256. The embedding size is flexible and depends on the specific application and amount of data available. The higher the embedding size, the more information is preserved and the less the autoencoder network is forced to learn a dense representation The RNN encoder 206 iterates through a feedback loop wherein the output of a given neuron in the one or more hidden layers of a RNN is provided to the neuron as an input in a subsequent timestep. The neuron processes the new inputs and then continues the feedback loop with each timestep of the network. The neuron processes the inputs by computing a weighted sum of the inputs and then applying an activation function, to the weighted sum before passing the result to the neurons through another iteration of the feedback loop. The RNN converts the independent activations into dependent activations by providing the same weights and biases to all layers in a feedback loop. RNNs provide a feedback loop which allows information from the previous timestep to be stored with the weights shared between layers. This makes RNNs well suited to processing variable lengths of sequential data. The RNN encoder outputs 4, 256 (2 layers, each with a forward and backward time window vector) embeddings, in an embedding vector of size 1024. The bottleneck encoder 208 pools the layers of RNN encoder 206 into a fixed embedding size of 256. In the described embodiment, the bottleneck encoder 208 has two fully connected layers of a first layer of 1024 x 512 connections and a second layer of 512 x 256 connections, both with Leaky ReLU activation. The bottleneck encoder 208 transforms the output of RNN encoder 206 to the required embedding size for hidden vector, H 210. In an alternative embodiment, the output of the RNN encoder 206 may match the required embedding size for hidden vector, H, for example, RNN encoder 206 may be a unidirectional, one-layer RNN encoder, in which case the bottleneck encoder 208 is not required. When a bottleneck encoder is required, other suitable implementations to match inputs and output are of course also possible.

The hidden vector, H 210 is a low dimensional representation of the input data X in a single vector of size 256. The hidden vector, H 210 is provided to fully connected layers FC log $\sigma^2$ 212 and FC $\mu$ 214 with linear activation which output vectors of mean $\mu(H)$ 218 and $\log((\sigma^2(H))$ 216 used to determine the variational loss 220. In the described embodiment, the variational loss is approximated using the KL divergence. The KL divergence is a statistical measure that quantifies how close two distributions are. Therefore, by minimising the KL divergence KL$(G(\mu(H),\sigma(H))|p(H))$ the deviation of the learned distribution from the prior distribution is penalised, where $G(\mu(H) , \sigma(H))$ is the learned distribution of the hidden embedding vector, H and p(H) is the prior distribution of H, which is normally distributed p(·)=$\mathcal{N}$ (·).

The KL divergence can be approximated by equation (1)

$$KL = \text{KL}(\text{G}(\mu(\text{H}),\sigma(H))|\mathcal{N}(\text{H})) = \frac{1}{2}\left(\mu(H)^2 + \sigma(H)^2 - \log(\sigma^2(H)) - 1\right) \quad (1)$$

The embedding, Z 224 is sampled from a normal distribution with mean, 0 and standard deviation, 1. This is then multiplied by $\sigma^2(H)$ 216 and added to $\mu(H)$ 218 in a process described as reparameterization 222 which is required in order to allow backpropagation through the random sampling process. Reparametrizing 222 the embedding to equal $\mu + \sigma^2 N(0,1)$ allows backpropagation of variational loss 220 through the network, while maintaining the ability to randomly sample the embedding from the distribution. Randomly sampling from the distribution enforces a continuous smooth latent space representation since from any sampling of the latent distributions the decoder model reconstructs the inputs.

The decoder part of the variational autoencoder network 200 takes as an input the low-dimensional embedding, Z 224 and decodes the information in the embedding to provide a reconstruction X 236 of the input data X 202. The decoder comprises an optional bottleneck decoder 226, an RNN Decoder 228, an Adm Encoder 232 and an Adm Decoder 234. As described above with reference to the bottleneck encoder 208, the bottleneck decoder provides the correct embedding size as an input to the next layer. In the described embodiment, the RNN decoder 228 is a unidirectional, one-layer RNN decoder, hence the bottleneck decoder is optional since there is no requirement for the bottleneck decoder to match the embedding size to the RNN decoder input. In an alternative embodiment, the RNN decoder is a bidirectional, two-layer RNN decoder. In which case the bottleneck decoder is a fully connected 256 x 1024 with Leaky ReLU. When a bottleneck decoder is required, other suitable implementations to match inputs and outputs are of course also possible. Equally, it will be appreciated that the input and output dimensions mentioned herein are examples of some specific embodiments.

The bottleneck decoder 226 transforms the size of embedding Z to the required embedding size for input to the RNN decoder 228. In the described embodiment, the unidirectional, one layer RNN decoder 228 performs the reconstruction in inverse order, starting at timestep n and going back to timestep 1. The use of a unidirectional, one layer RNN decoder to perform the reconstruction in reverse order, gives more weight to later time windows which may result in a model with improved learning of outcomes, whilst minimising the computational requirements of the network over an alternative embodiment using a bidirectional decoder. In the first iteration of the RNN decoder 228, a start token 230, is passed into the network through Adm encoder 232, configured in the same way as Adm encoder 204 with leakly ReLU activation to convert the time window feature vector to the predetermined size, in order to initialise the first iteration of RNN decoder 228. The output of RNN decoder is provided as an input to the Adm decoder 234, configured to convert the output of the RNN decoder back into the original feature space of size 1151, in order to produce a reconstruction 236 of the input data.

The reconstruction 236 is used to compute a reconstruction loss 238. The reconstruction loss 236 may be any reconstruction loss appropriately defining the error between the input vector X 202 and the reconstruction 236. In some embodiments, where the input comprises a vector composed by categorical and continuous variables, the loss in the categorical variables may be minimized using binary cross entropy. The loss in the continuous variables may be minimized using mean squared error. As no labels are used, the training using the reconstruction loss is unsupervised. The non-variational part of the autoencoder reconstruction loss may in some embodiments be defined as a combination of the continuous loss (2) and the categorical loss (3):

$$Loss_{continous\,(MSE)} = \frac{1}{n}\Sigma_i\left(X_i - \widehat{X_i}\right)^2 \qquad (2)$$

where $X_i$ and $\widehat{X_i}$ are the patients I of the patient data structure X in the input and output respectively, and

$$Loss_{categorical\,(BCE)} = -\Sigma_j t_j \log(p_j) \qquad (3)$$

where $t_j$ is the ground truth value of the discrete variable, in the described embodiment and $p_j$ is the probability of discrete variable 'j' in the prediction

The loss of the variational autoencoder, L1, can therefore be defined as a combination of the reconstruction loss of the autoencoder and the variational loss in accordance with equation (4) :

$$L1 = Loss_{continous\,(MSE)} + Loss_{categorical\,(BCE)} + Loss_{variational\,(KL\,divergence)} \qquad (4)$$

The fully connected hazard layer 240 of the neural network 200 takes the embedding 224 as an input. In the described embodiment, hazard layer 240 is a single layer, which encourages the network to optimise the learning of the embedding $z_i$, rather than putting more weight on the hazard layer, however, it is understood that in an alternative embodiment, the hazard layer 240 could comprise multiple layers. Based on the embedding $z_i$ 224, the hazard layer 240 determines a risk score , $\theta_i = z_i^T \beta$ , for each patient $i$. The risk score, $\theta_i$ is calculated as a linear combination of $z_i$ and thus represents the effect of EHR entries, $X_i$, on the outcome of interest at time, $T$, fully mediated by $z_i$. Borrowing terminology from traditional statistics, $\exp(\theta_i)$ may be considered the hazard ratio of patient $i$.

The hazard layer 240 is supervised as it compares the estimated risk score against known outcomes using Di = {Xi, ti, ei}, where Xi is the input data fed to the variational autoencoder network, ti is the time that an outcome or censoring was observed, and ei is the outcome indicator. The Cox regression loss L2 242 may, in the described embodiments may be defined as a negative partial log likelihood of the output scalar risk score $\theta_i$ (which in turn depends on the learnt parameters $\beta$, $\mu$, and $\sigma^2$). $\beta$ are the parameters of the hazard layer, in the described a fully connected single layer. See equation (5). For each patient i that experienced the outcome e (e$(i)$=1), the risk scores of all patients j that experienced the outcome e (e=1) or have a censored event (e=0) at a time equal to or after the time patient i experienced the outcome e are exponentiated and summed ($\Sigma_{ti \leq tj}\exp(\theta_j)$) and the log subtracted from the risk score of patient i. L2 is then found as the sum of the loss for each patient i:

$$L2 = -\sum\nolimits_{e(i)=1}(\theta_i - log \sum\nolimits_{ti \leq tj} \exp(\theta_j)) \qquad (5)$$

Importantly, the probability of observing the outcome for each patient i depends on the length of time that the patient was observed in the data. For example, the probability of observing the death of any one patient will be very different if they were observed for one month as opposed to ten years. Conversely, the fact a patient's death wasn't observed before they were lost to follow-up (also called censoring) does not imply that the patient hasn't experienced death since, perhaps even soon after they stopped being observed. In EHR data, where patients can join or leave the cohort at any time, for example, when changing hospitals, it is therefore paramount to take the length of follow-up into account to avoid biased results. Unlike more commonly used binary classification losses, the use of the Cox regression loss 242 crucially allows for this and correctly accounts for the effects of uninformative censoring.

Clustering is performed on the embedding space 224. Cluster assignments are obtained for each patient i of the input data 202 and clustering loss is determined 252. By combining the unsupervised reconstruction and clustering with the one or more supervised hazard tasks, process 100 produces a cluster optimised embedding of high-dimensional input data that is adapted to facilitate separation of clusters in the embedded space with respect to differences in the probability of experiencing the outcome.

A clustering loss L3 may in some embodiments be defined in accordance with equation (6):

$$L3 = \Sigma_i \Sigma_j \, p_{ij} log \frac{p_{ij}}{q_{ij}} \qquad (6)$$

where j e {1, 2 ... k} represents the index of a cluster from a total of k clusters. $q_{ij}$ represents the probability of assigning instance i of the input data to cluster j (soft assignment) and $p_{ij}$ represents an auxiliary target distribution used to refine the clusters by learning from high confidence assignments.

To facilitate an improved clustering, the auxiliary target distribution $p_{ij}$ is chosen to have the following two properties: put more emphasis on high confidence assignments and normalise the contribution of each cluster centre to the clustering loss in order to prevent large clusters from distorting the embedded space. Optionally, the target distribution may be chosen to strengthen predictions (measured through a clustering quality criterion such as cluster purity).

By way of non-limiting example, the auxiliary target distribution $p_{ij}$ may be computed by squaring $q_{ij}$ and normalising by frequency per cluster in accordance with equation (7):

$$p_{ij} = \frac{q_{ij}^2/f_j}{\sum_{j'} q_{ij'}^2/f_{j'}}, \qquad (7)$$

where $f_j = \Sigma_i \, q_{ij}$ is the soft cluster frequency of cluster j. By way of non-limiting example, the soft assignment distribution $q_{ij}$ may be computed using the Student t-distribution to measure the similarity between an embedding $z_i$ of an instance $X_i$ of the input data and a centre $c_j$ of cluster j, in accordance with equation (8):

$$q_{ij} = \frac{(1 + \|z_i - c_j\|^2/\alpha)^{-\frac{\alpha+1}{2}}}{\sum_{j'}(1 + \|z_i - c_{j'}\|^2/\alpha)^{-\frac{\alpha+1}{2}}}, \qquad (8)$$

where a represents the degrees of freedom of the Student's t-distribution. The Student t-distribution is convenient because it is non-parametric, but it could be appreciated that other parametric distribution or other similarity kernels may be used. Equally, different target distributions $p_{ij}$ may be used.

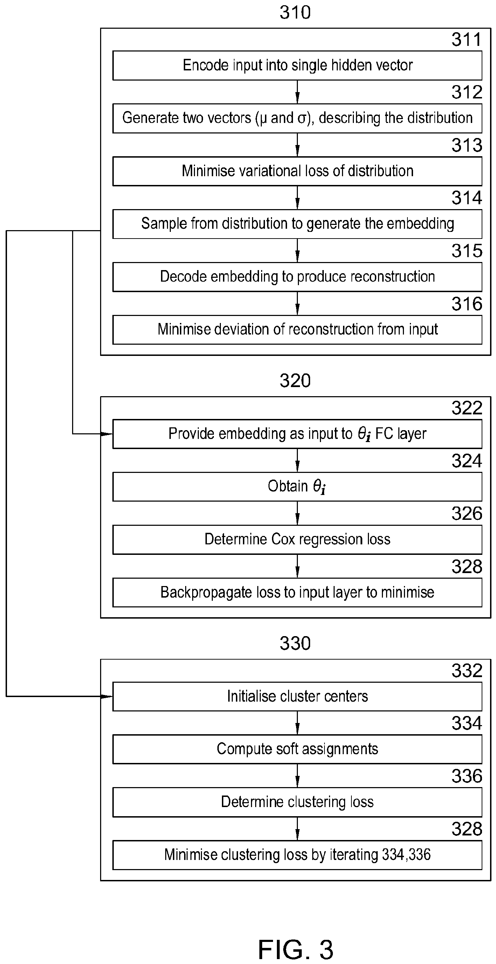

Figure 3 shows a detailed process of processing data to learn an embedding, using a variational autoencoder network 200 as described above. It will be appreciated that the process can equally be used with other variational autoencoders, other denoising autoencoders and indeed any other suitable embedding. Furthermore, it will be appreciated that the autoencoder need not comprise an RNN, selected due to its suitability for temporal data. The autoencoder may be a fully connected autoencoder or have convolutional neural networks as decoder and encoder networks, for example.

A subprocess 310 trains the variational autoencoder network 200 using VAE L1 loss.

At step 311, the encoder part of the variational autoencoder, comprising the Adm Encoder 204, RNN encoder 206 and bottleneck Encoder 208, encodes the input 202 as a single embedding vector, H 210. At step 312, H is fed into fully connected layers 214 and 212 which output two vector of size 256 of mean $\mu(H)$ and standard deviation $\sigma^2(H)$ which together represent H as a distribution. At step 313 the variational loss of the learnt distribution is minimised using the approximations described above and the embedding, Z, 224 is sampled from a normal distribution and reparameterization using $\mu + \sigma^2$ N(0,1) at step 314 after which the embedding is decoded by the decoder part comprising bottleneck Decoder 226, RNN Decoder 228 and Adm Decoder 234 to produce a reconstruction of the input data at step 315 and the deviation of the reconstruction from the input is minimised at 316.

A subprocess 320 trains the variational autoencoder network 200 using Cox regression loss.

The embedding, Z 224 is provided as an input to the hazard layer 240 at step 322. A risk score, $\theta_i$ is obtained at step 324 and the Cox regression loss of the risk score against the known one or more outcomes is determined at step 326. The loss is backpropagated through the network through the reparameterization layer 222 to the input in order to optimise the embedding at step 328.

A subprocess 330 trains the variational autoencoder network 200 using the clustering loss.

At step 332, clusters centres are initialised using any standard clustering method that finds a specified number of clusters on the learnt embedding space . In the described embodiment, k-means clustering is used to initialise k cluster centroids, however it will be appreciated that any standard clustering algorithm could be used to initialise the clusters. Soft assignments are computed for each patient at step 334. The soft assignment distribution is described above with reference to equation 8 and describes the probability of assigning patient "i" to cluster "j". The clusters are iteratively refined by learning from their high confidence assignments using the auxiliary target distribution described in equation 7, in order to minimise the clustering loss, L3, which describes the divergence between the soft assignments and the auxiliary target distribution.

Throughout subprocess 330, of training the variational autoencoder network 200 using the clustering loss, the soft assignment distribution is not fixed. The soft assignment distribution described in equation 8 described the similarity of embedding $z_i$ of an instance $X_i$ of the input data and a centre $c_i$ of cluster j. As such, by simultaneously training the network in accordance with subprocess 310 using the VAE L1 loss and subprocess 330 using the clustering loss, the network optimises the embedding of encoder to provide an embedding space that minimises the entropy of the soft clustering distribution.

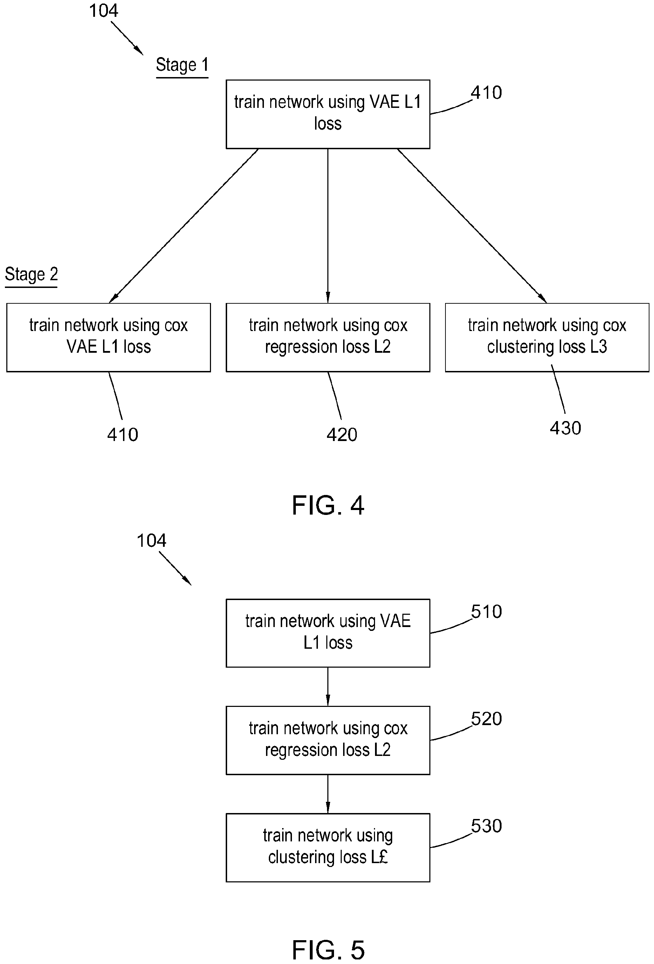

In some embodiments, step 104, processing the input data to learn an embedding, is a two-stage process. Figure 4 shows a high-level process of processing data to learn an embedding in two stages, according to some embodiments. Stage 1 of Figure 4 comprises the subprocess 310 of training the network using VAE L1 loss 410 alone. Stage 1 may comprises using a first dataset, wherein at least some of the first dataset does not comprise an outcome of interest. This is advantageous since it allows the network to be trained on a large EHR dataset from patients with different or no outcomes since subprocess 310 is unsupervised.

Stage 2 comprises subprocess 310 of training the network using VAE L1 loss 410, subprocess 320 of training the network using Cox regression loss 420 and subprocess 330 of training the network using clustering loss 430. Stage 2 comprises training the sub processes on a second dataset having the outcome of interest. The second dataset may be a subset of the first dataset.

Stage 2 may comprise training using the Cox regression loss 420 and clustering loss 430 simultaneously. Alternatively, stage 2 may in separate epochs, and where applicable, interleaving respective training epochs reducing the Cox regression loss 420 and the clustering loss 430 function.

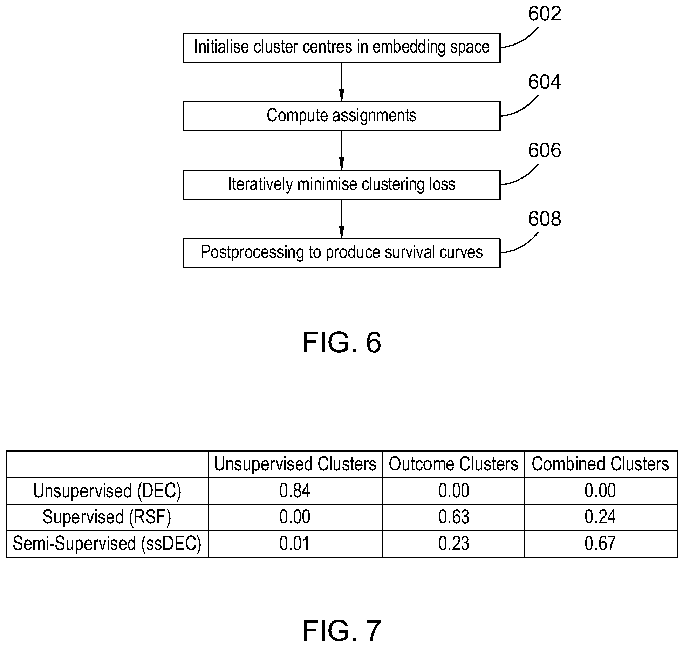

Where applicable, training using the clustering loss 430 function may be done in a separate stage subsequent to training on the VAE L1 410 and Cox regression losses 420. In some embodiments, processing the input data to learn the embedding 104 and clustering the input data in the embedding space 106 of process 100 may be combined into a single step. In these embodiments, the clusters can be defined using the soft assignments $q_{ij}$ from clustering loss L3 and therefore, in these embodiments, the clustering of input data is a by-product of processing the input data to learn the embedding 104. In other embodiments, such as the embodiment described below with reference to Figure 6, step 106 is performed subsequently to processing the input data to learn an embedding.

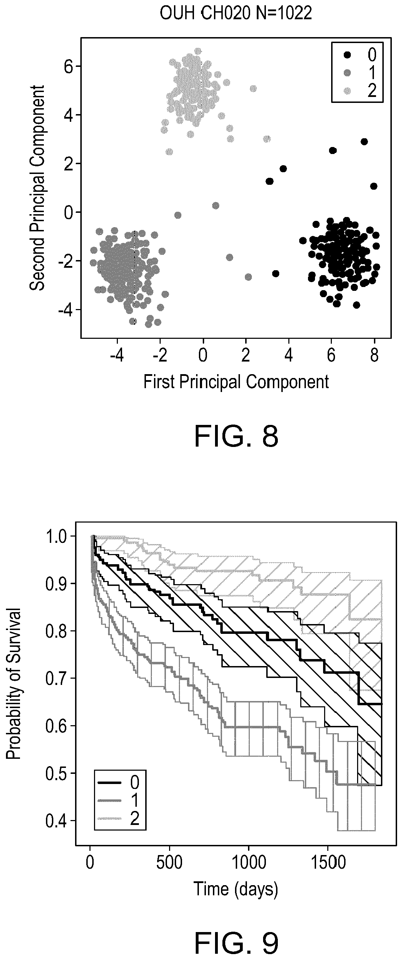

Training the network to minimise the Cox regression loss 420 simultaneously to minimising the VAE L1 loss 410, modifies the embedding from the unsupervised training step to include information about the known outcome. Training the variational autoencoder network to minimise the clustering loss simultaneously to the VAE L1 loss can be done by iteratively computing the soft assignment $q_{ij}$ between the embedding and the clusters and optimising the embedding at the same time as the cluster centres by learning from the high confidence assignments with the help of the auxiliary target distribution $p_{ij}$ using clustering loss L3. This has been found to improve the separability of the embedding and facilitate the discovery of unknown groups, as will be discussed later on with reference to Figure 8. It will be appreciated that once training is complete, the decoder can be detached from the network.

In further embodiments, step 104 is a one-stage process in which case, only stage 2 of Figure 4 is used. Subprocess 310 of training the network using VAE L1 loss 410, subprocess 320 of training the network using Cox regression loss 420 and subprocess 330 of training the network using clustering loss 430 may occur by interleaving respective training epochs or simultaneously. In the case comprising the subprocesses being performed simultaneously, the loss function of the VAE L1 loss, Cox regression loss L2 and clustering loss L3 can be combined as a single loss function L in accordance with equation (9):

$$L = w_1 L1 + w_2 L2 + w_3 L3 \qquad\qquad (9)$$

where $w_1$, $w_2$ and $w_3$ represent the weights assigned to each loss and can be set according to what the optimal embedding would be depending on each problem of interest.

Figure 5 shows a high-level process of processing data to learn an embedding by performing subprocess 310 of training the network using VAE L1 loss 510, subprocess 320 of training the network using Cox regression loss 520 and subprocess 330 of training the network using clustering loss 530 sequentially.

Figure 6 shows a flow chart of clustering the input data in the embedded space step 106 of to process 100.

In some embodiments, step 106 is performed subsequently to processing the input data to learn an embedding 104. Step 106 may comprise clustering the embeddings of the data units into a plurality of clusters and determining a survival curve for each cluster. Initial cluster centres are obtained in step 602 using the clusters of embedding instances in the cluster optimised embedding space learnt in step 104. In step 604, assignments of the embedding instances $z_i$ of input data $X_i$ are obtained and the clustering loss is minimised in step 606 by iteratively updating the clusters. The clustering may be done using the clustering algorithm used for training, where applicable, or using a different clustering algorithm, for example agglomerative hierarchical clustering and a corresponding loss function.

In some embodiments, a postprocessing step 608 uses the hazard ratio to produce survival curves for each cluster in order indicate the differences in survival time within the clusters. In the described embodiment, Kaplan-Meier curves are plotted for each cluster.

An advantage of the described method of embedding and clustering is that unknown clusters can be discovered. This can be illustrated using a synthetic dataset created using 35 artificial diagnoses codes which is generated to include clusters to be discovered. The synthetic dataset is generated including data that clusters according to a combination of factors. Unlabelled data, using artificial diagnoses codes was included to represent biases in data, such as data coming from different sources, different hospitals or groups of different disease types. This data produces clusters discoverable using unsupervised clustering. Labelled data was included to represent patients with different outcomes, for example the outcome of "mortality". This data produces clusters discoverable using supervised clustering. Combined data linking both diagnostic codes and outcomes was produced by defining smaller code biases and smaller difference in outcomes so as not to produce trivial clusters. This data produces combined clusters of potentially clinically interesting sub phenotypes of patients with varying time to outcome and are only discoverable using semi-supervised learning.

Specifically, the unsupervised clusters were created from 15 binary diagnoses code features. Each feature was set to have a high presence in one cluster and low in the remaining clusters. Outcome clusters were simulated by creating time-to-event values by sampling from different exponential distributions simulating survival curves, with 5 binary diagnoses codes related to these outcomes. 'Mixed' clusters were sampled from the outcome clusters so differences in outcome exists between the 'mixed' clusters, although the difference are smaller than the outcome clusters. 15 binary diagnoses codes related to the 'mixed' clusters are created in the same way as in the unsupervised clusters but with smaller differences in the presence of the features.

An adjusted Rand index was used to calculate the agreement between the discovered clusters and the true synthetic clusters. The Rand index is used to measure the agreement between two data clusters and indicates accuracy. The Rand index has a value between 0 and 1, with 0 indicating that the two data clusters do not agree on any points and 1 indicating the clusters completely agree. For comparisons purposes, an unsupervised method using DEC and a supervised method using random survival forests RSF, were also applied to the same dataset. The adjusted Rand index is a form of the Rand index that is adjusted for the chance grouping of points.

On its own, DEC is important in uncovering different sub-populations within EHR trajectory data, but since it is unsupervised, it is unable to account for outcomes in the data. RSF is a supervised technique which can be used for predicting clinical outcomes from EHR trajectory data, however, purely supervised learning focuses only on finding features which are relevant to predict the outcome and do not consider the similarity between patient clusters.

Figure 7 shows the adjusted Rand indices for the three sets of clusters using the unsupervised, the supervised, and the proposed semi-supervised method on the synthetic dataset. The results in figure 7 shows unsupervised clustering was able to discover the unsupervised clusters (Rand index 0.84) of unlabelled data and supervised clustering was able to discover the outcome clusters (Rand index 0.63) of labelled data. The results also show that both the unsupervised method (0.00) and the supervised method (0.24) are unable to discover the combined clusters, in contrast to the disclosed semi-supervised method, which showed superior ability to find the combined clusters (rand index 0.67). The variational autoencoder networks 200 improves on existing embedding methods such as DEC by combining unsupervised and supervised training of an autoencoder network in a novel way, using labels of known outcomes in the data. The inclusion of a supervised component facilitates the discovery of unknown subgroups within the data, thus enabling an improved analysis of high-dimensional data, since unsupervised clustering alone would discover clusters corresponding to different hospitals. Supervised clustering alone would cluster patients with different risk of mortality whereas the semi-supervised method finds "mixed clusters" which are impacted by both input features and outcomes due to the fact that clustering (430) is performed in conjunction with L1 (410) and cox regression (420).

Detailed Example: Time to event after primary diagnosis

In the detailed example described below, the semi-supervised clustering of process 100, using the network architecture illustrated in Figure 2, was performed on EHR data from two different trusts, collected from patients with a primary diagnosis of diabetes. Since the data was obtained from two different trusts, there is potential for 2 unsupervised data clusters. The input data was pre-processed (step 102) and the embedding was obtained (step 104) by applying the two stages described above with reference to Figure 4.

In Stage 1, the model is initialized to learn an embedding based of the input data using a variational autoencoder using subprocess 310 of training the network using VAE L1 loss 410.

In the described embodiment, 1151 features were included. Therefore, the encoder comprised the fully connected 1151 x 256 Adm encoder 204, with a Leaky ReLu activation and negative slope 0.1, the bidirectional GRU RNN encoder 206 with embedding size 256 and the fully connected bottleneck encoder 208 with layers 1024 x 512 and 512 x 256 with leaky ReLU activation described in Figure 2. The embedding 224 was sampled from the distribution 216, 218 generated by the encoder using reparameterization 222. The decoder comprised the RNN Decoder 228 with embedding size 256, the 1151 x 256 Adm Encoder 232 and the 256 x 1151 Adm Decoder 234.

In Stage 2, semi-supervised clustering is performed by applying subprocess 310 of training the network using VAE L1 loss 410, subprocess 320 of training the network using Cox regression loss 420 and subprocess 330 of training the network using clustering loss 430 simultaneously. After creating a cluster and Cox regression optimized embedding using the two-step algorithm, the resulting embedding was clustered into unknown subgroups in step 106.

The dataset contained EHR of 3,576 patients who have had a diagnosis of diabetes. The EHR of each patient was composed of physiological data from one or more hospital admissions associated with an indication of whether the outcome of "mortality" was observed and the time at which this determination was made. The outcome of "mortality" indicates the patient died at time, t i.e an outcome, e was observed. Each admission data contains multiple features representing laboratory results, diagnosis codes (ICD-10 codes), procedure codes (OPCS4 codes), drug codes and vital sign measurements such as: systolic blood pressure, diastolic blood pressure, heart rate, oxygen saturation, temperature, alanine aminotransferase, creatinine, c-reactive protein, platelets, potassium, sodium, urea and white blood cells.

It will be appreciated that, while the specific input data structure with the mentioned features is introduced in the context of a detailed example experiment, this data structure can be used in conjunction with any of the aspects and embodiments described above.

Results for Detailed Example

The semi-supervised clustering model was trained on the EHR dataset according to the two stage process described above, in order to use a combination of supervised and unsupervised learning to improve the characterization of unknown subgroups. The disclosed semi-supervised machine learning model learns an embedding that is tuned to the problem of separating known outcomes in the data due to supervised training performed by reducing the Cox regression loss data units with labelled outcomes.

Figure 8 depicts the embedding space of the EHR trajectory data from two hospital sources using the process described above with reference to Figures 1 to 6. Three clearly separable clusters are discovered from the data after training the model with a VAE L1 loss, Cox loss and clustering loss, further illustrating the advantage of discovering unknown clusters described above with reference to figure 7.

Post processing, as described above with reference to figure 6, was performed on the clustered data in order to generate survival curves. Figure 9 shows the corresponding survival curves for the three clusters where the 'x' axis indicates the time in days and the 'y' axis indicates the probability of survival for patients within the specific cluster. Clear differences in survival outcomes are seen between clusters which indicates that the algorithm is able to discover clusters in the data whilst taking outcomes into account, in this case, patient survival.

The inventors have found that combining supervised and unsupervised learning facilitates finding unknown patient subgroups within the known populations, for example within a cohort associated with a particular outcome. Consequently, the disclosed method can improve patient stratification and in this way facilitate the discovery of clusters in the data whilst taking outcomes, such as patient survival, into account.

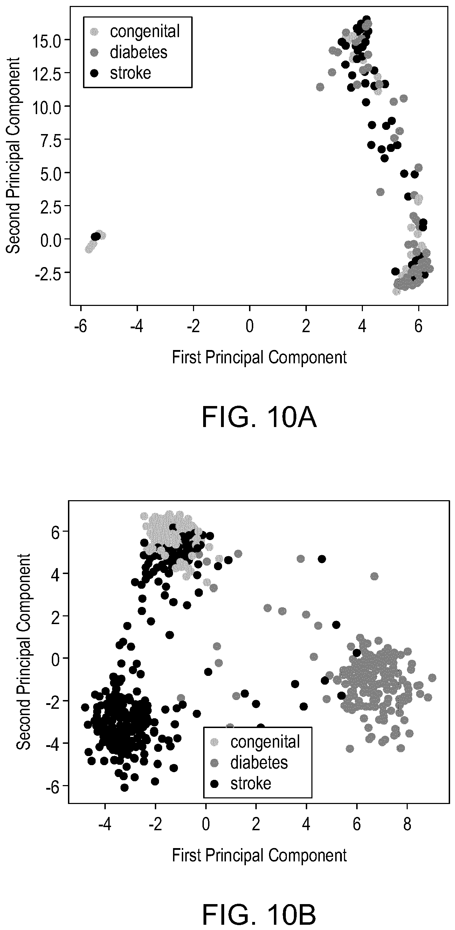

To illustrate the benefits of a variational autoencoder over a standard autoencoder - a further dataset containing EHR of 8,952 patients belonging to one of three known groups was created from two hospital sources. Group 1 comprises 4,516 patients with a primary diagnosis of stroke (and never a diagnosis of diabetes or congenital disorders), group 2 comprises 3,420 patients with a primary diagnosis of diabetes (and never a diagnosis of stroke or congenital disorders), and group 3 comprises 1,016 patients with a primary diagnosis of congenital disorders (and never a diagnosis of stroke or diabetes). Embedding was performed using a standard autoencoder and a variational autoencoder. The embedding space of a variational autoencoder, Figure 10B, shows clearly distinct known patient groups whereas the embedding space of a standard autoencoder, Figure 10A, shows the patient groups overlapping.

Example Hardware Implementation

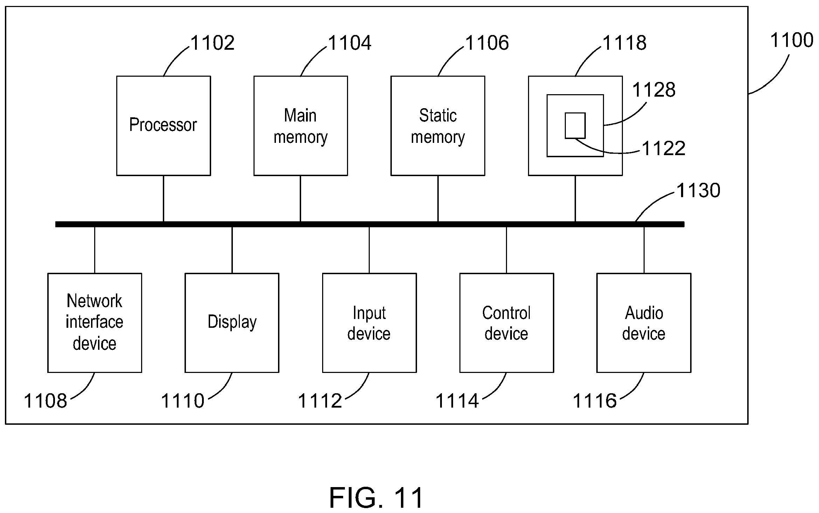

Figure 11 illustrates a block diagram of one implementation of a computing device 1100 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 1100 includes a processing device 1102, a main memory 1104 (e.g., read-only memory (ROM), flash memory, dynamic random access memory (DRAM) such as synchronous DRAM (SDRAM) or Rambus DRAM (RDRAM), etc.), a static memory 1106 (e.g., flash memory, static random access memory (SRAM), etc.), and a secondary memory (e.g., a data storage device 1118), which communicate with each other via a bus 1130.

Processing device 1102 represents one or more general-purpose processors such as a microprocessor, central processing unit, or the like. More particularly, the processing device 1102 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 1102 may also be one or more special-purpose processing devices such as an application specific integrated circuit (ASIC), a field programmable gate array (FPGA), a digital signal processor (DSP), network processor, or the like. Processing device 1102 is configured to execute the processing logic (instructions 1122) for performing the operations and steps discussed herein.

The computing device 1100 may further include a network interface device 1108. The computing device 1100 also may include a video display unit 1110 (e.g., a liquid crystal display (LCD) or a cathode ray tube (CRT)), an alphanumeric input device 1112 (e.g., a keyboard or touchscreen), a cursor control device 1114 (e.g., a mouse or touchscreen), and an audio device 1116 (e.g., a speaker).

The data storage device 1118 may include one or more machine-readable storage media (or more specifically one or more non-transitory computer-readable storage media) 1128 on which is stored one or more sets of instructions 1122 embodying any one or more of the methodologies or functions described herein. The instructions 1122 may also reside, completely or at least partially, within the main memory 1104 and/or within the processing device 1102 during execution thereof by the computer system 1100, the main memory 1104 and the processing device 1102 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "enabling", "maintaining," "identifying", "providing", "applying", "training" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### Claims

1. A computer-implemented method of training an artificial neural network, the method comprising:

providing an artificial neural network comprising an input layer, an embedding layer and a hazard layer;
providing data units within a data space to have a data value for each dimension of the data space and an outcome label associated with each data unit indicating one or more of a plurality of outcomes for each data sample and a time associated with the data unit;
applying the data values of each data unit to the input layer to generate an embedding, wherein outputs of the embedding layer resulting from the application of each data unit provide the embedding of the data unit and wherein the embedding has fewer dimensions than the data space;
using the embedding of each data unit to provide an input to the hazard layer to produce a risk score for each data unit as an output of the hazard layer;
comparing the data values and values generated using the embedding to determine a reconstruction loss for each data unit;
comparing the risk score and the outcome label to determine a Cox regression loss for each data unit;
using the respective embeddings of the data units as an input to a clustering algorithm to assign each data unit to a respective one of a plurality of clusters by optimising a clustering loss; and
training the artificial neural network to reduce the reconstruction loss, the Cox regression loss and the clustering loss across the data units.

2. The method of claim 1 wherein the neural network comprises an output layer, the embedding layer being between the input and output layers to define an autoencoder network, wherein the values generated using the embedding are output by the output layer.

3. The method of claim 1 wherein the autoencoder neural network is a variational autoencoder neural network.

4. The method of any proceeding claim wherein, training the artificial neural network to reduce the reconstruction loss, the Cox regression loss and the clustering loss across the data units comprises training the artificial neural network to reduce the reconstruction loss, the Cox regression loss and the clustering loss simultaneously.

5. The method of any of claims 1-3, wherein, training the artificial neural network to reduce the reconstruction loss, the Cox regression loss and the clustering loss across the data units comprises training the artificial neural network to reduce the Cox regression loss and the clustering loss subsequent to training the autoencoder to reduce the reconstruction loss.

6. The method of claim 4, wherein the data is used for training the artificial neural network to reduce the Cox regression loss and the clustering loss is a subset of the dataset used for training the autoencoder to reduce the reconstruction loss.

7. The method of any one of claims 2 to 5, wherein the autoencoder comprises an input recurrent neural network comprising the input and embedding layers and an output recurrent neural network comprising the embedding and output layers.

8. The method of claim 7, wherein the input recurrent neural network is a bidirectional recurrent neural network and the output recurrent neural network is a unidirectional recurrent neural network

9. The method of any preceding claim, wherein each data unit is representative of phenotypic data of a respective patient and the time at which the phenotypic data was observed from a population of patients, wherein the population comprises at least one outcome and the data label identifies an occurrence of the outcome.

10. The method of claim 9, wherein the phenotypic data is obtained from an electronic health record.

11. The method of claim 9 or claim 10, wherein the phenotypic data comprises laboratory measures, diagnosis codes (ICD-10 codes), procedure codes (OPCS4 codes) and drug codes (BNF codes)

12. The method of any one of claims 8 9 to 11, wherein the at least one outcome comprises mortality.

13. A computer implemented method of identifying subgroups comprising training a neural network in accordance with the method of any one of claims 1 to 12, the method comprising clustering the embeddings of the data units into a plurality of clusters

14. The method of claim 13, further comprising identifying survival curves for each of the plurality of clusters.

15. One or more computer-readable media encoding computer instruction that, when executed on a computing device, implement a method as claimed in any one of the preceding claims.

100

```
┌─────────────────────────┐
│   receive and preprocess │    102
│       input data         │
└─────────────────────────┘
            │
            ▼
┌─────────────────────────┐
│ process input data to learn │ 104
│      an embedding        │
└─────────────────────────┘
            │
            ▼
┌─────────────────────────┐
│  cluster input data in the │ 106
│     embedded space       │
└─────────────────────────┘
```

FIG. 1

**FIG. 2**

200

Variational Autoencoder 201

Clustering

Supervised objective

252 — Cluster loss
250 — Assignments

242 — Cox loss
240 — $\theta_i$

238 — Reconstruction loss

Decoder

Reconstructed Input data

236 — rec data t_(n-1)
234 — Adm.Dec
228 — RNN Decoder t_1
232 — Adm.Enc
230 — input t_2

236 — rec data t_(n-1)
234 — Adm.Dec
228 — RNN Decoder t_n-1
232 — Adm.Enc
230 — input t_n

236 — rec data t_n
234 — Adm.Dec
228 — RNN Decoder t_n
232 — Adm.Enc
230 — Start token

Decoder RNN

226 — Bottlecheck Dec FC

224 — Z

Variational opt. 220

VAE regularizer loss

218 — $\mu$
216 — $\log \sigma^2$

214 — FC $\mu$
212 — FC $\log \sigma^2$

222 — Reparameterization $\mu + \sigma^2 \, N(0,1)$

Encoder

210 — H
208 — Bottlecheck Enc FC

Encoder RNN

206 — RNN Encoder t_1
206 — RNN Encoder t_n
204 — Adm.Enc
202 — input t_1
202 — input t_n

Input data

Preprocessing: time window & aggregation

time   o EHR observation

310

| 311 |
| --- |
| Encode input into single hidden vector |

| 312 |
| --- |
| Generate two vectors (μ and σ), describing the distribution |

| 313 |
| --- |
| Minimise variational loss of distribution |

| 314 |
| --- |
| Sample from distribution to generate the embedding |

| 315 |
| --- |
| Decode embedding to produce reconstruction |

| 316 |
| --- |
| Minimise deviation of reconstruction from input |

320

| 322 |
| --- |
| Provide embedding as input to $\theta_i$ FC layer |

| 324 |
| --- |
| Obtain $\theta_i$ |

| 326 |
| --- |
| Determine Cox regression loss |

| 328 |
| --- |
| Backpropagate loss to input layer to minimise |

330

| 332 |
| --- |
| Initialise cluster centers |

| 334 |
| --- |
| Compute soft assignments |

| 336 |
| --- |
| Determine clustering loss |

| 328 |
| --- |
| Minimise clustering loss by iterating 334,336 |

FIG. 3

104

Stage 1

train network using VAE L1
loss — 410

Stage 2

| train network using cox VAE L1 loss | train network using cox regression loss L2 | train network using cox clustering loss L3 |

410 420 430

FIG. 4

104

train network using VAE
L1 loss — 510

train network using cox
regression loss L2 — 520

train network using
clustering loss L£ — 530

FIG. 5

602

Initialise cluster centres in embedding space

604

Compute assignments

606

Iteratively minimise clustering loss

608

Postprocessing to produce survival curves

## FIG. 6

|  | Unsupervised Clusters | Outcome Clusters | Combined Clusters |
|---|---|---|---|
| Unsupervised (DEC) | 0.84 | 0.00 | 0.00 |
| Supervised (RSF) | 0.00 | 0.63 | 0.24 |
| Semi-Supervised (ssDEC) | 0.01 | 0.23 | 0.67 |

## FIG. 7

OUH CH020 N=1022

FIG. 8

FIG. 9

FIG. 10A

FIG. 10B

FIG. 11

Europäisches Patentamt

European Patent Office

Office européen des brevets

# EUROPEAN SEARCH REPORT

**Application Number**

EP 21 19 4177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MA HAOJIE ET AL: "Unsupervised Human Activity Representation Learning with Multi-task Deep Clustering", PROCEEDINGS OF THE ACM ON INTERACTIVE, MOBILE, WEARABLE AND UBIQUITOUS TECHNOLOGIES, ACMPUB27, NEW YORK, NY, USA, vol. 5, no. 1, 29 March 2021 (2021-03-29), pages 1-25, XP058665840, DOI: 10.1145/3448074 * sections 4.1-4.5; figures 1, 2 * ----- | 1-15 | INV. G06N3/04 G06N3/08 |
| X | YUFANG HUANG ET AL: "DICE: Deep Significance Clustering for Outcome-Aware Stratification", ARXIV.ORG, CORNELL UNIVERSITY LIBRARY, 201 OLIN LIBRARY CORNELL UNIVERSITY ITHACA, NY 14853, 7 January 2021 (2021-01-07), XP081853608, * sections 3.1-3.3, 3.5.1, 4.1; figures 1, 3 * ----- | 1-15 | |
| X | OLIVER CARR ET AL: "Deep Semi-Supervised Embedded Clustering (DSEC) for Stratification of Heart Failure Patients", ARXIV.ORG, CORNELL UNIVERSITY LIBRARY, 201 OLIN LIBRARY CORNELL UNIVERSITY ITHACA, NY 14853, 18 January 2021 (2021-01-18), XP081860942, * section 2.2 * ----- -/-- | 1-15 | **TECHNICAL FIELDS SEARCHED (IPC)** G06N |

The present search report has been drawn up for all claims

| Place of search | Date of completion of the search | Examiner |
|---|---|---|
| Munich | 22 February 2022 | Montoneri, Fabio |

EPO FORM 1503 03.82 (P04C01)

page 1 of 2

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIN ERXUE ET AL: "SU-IDS: A Semi-supervised and Unsupervised Framework for Network Intrusion Detection", 13 September 2018 (2018-09-13), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 322 - 334, XP047485226, ISBN: 978-3-540-74549-5 [retrieved on 2018-09-13] * sections 3.2, 4.1; figure 1 * ----- | 1-15 | |
| A | XIAOYU ZHANG ET AL: "OmiEmbed: a unified multi-task deep learning framework for multi-omics data", ARXIV.ORG, CORNELL UNIVERSITY LIBRARY, 201 OLIN LIBRARY CORNELL UNIVERSITY ITHACA, NY 14853, 18 May 2021 (2021-05-18), XP081955983, * pages 3-6 * ----- | 1-15 | |
| A | GHALIB A BELLO ET AL: "Deep learning cardiac motion analysis for human survival prediction", ARXIV.ORG, CORNELL UNIVERSITY LIBRARY, 201 OLIN LIBRARY CORNELL UNIVERSITY ITHACA, NY 14853, 8 October 2018 (2018-10-08), XP080930814, * pages 7-9; figure 6 * ----- | 1-15 | TECHNICAL FIELDS SEARCHED (IPC) |

The present search report has been drawn up for all claims

| Place of search | Date of completion of the search | Examiner |
|---|---|---|
| Munich | 22 February 2022 | Montoneri, Fabio |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIE, JUNYUAN ; ROSS GIRSHICK ; ALI FARHADI.** Unsupervised deep embedding for clustering analysis. *International conference on machine learning,* 2016